# EUROPÄISCHE PATENTSCHRIFT

(11) **EP 3 322 580 B1**
(45) Veröffentlichungstag und Bekanntmachung des Hinweises auf die Patenterteilung: **13.01.2021**
(21) Anmeldenummer: 16759671.7
(22) Anmeldetag: 07.07.2016
(51) Int. Cl.: B29C 67/00, B33Y 10/00, B33Y 30/00, B41J 25/316

(54) **VORRICHTUNG UND VERFAHREN ZUM JUSTIEREN EINES DRUCKKOPFES**
DEVICE AND METHOD FOR ADJUSTING A PRINT HEAD
DISPOSITIF ET PROCÉDÉ POUR AJUSTER UNE TÊTE D'IMPRESSION

(30) Priorität: 14.07.2015 DE 102015008860
(43) Veröffentlichungstag der Anmeldung: 23.05.2018
(73) Patentinhaber: voxeljet AG, 86316 Friedberg (DE)
(72) Erfinder: EDERER, Ingo, 82269 Geltendorf (DE); GRASEGGER, Josef, 86391 Sadtbergen (DE); GÜNTHER, Daniel, 81317 München (DE); TRAUTWEIN, Ernst, 86495 Eurasburg (DE)
(74) Vertreter: Helbig, Christian
(86) Internationale Anmeldenummer: PCT/DE2016/000267
(87) Internationale Veröffentlichungsnummer: WO 2017/008777

(56) Entgegenhaltungen:
- WO-A1-2014/012560
- CN-A- 104 309 129
- DE-A1- 4 125 775
- US-A1- 2010 100 224
- US-A1- 2010 245 415
- US-B2- 8 956 140

## Beschreibung

Die Erfindung bezieht sich auf eine Vorrichtung und ein Verfahren zum Justieren eines Druckkopfes bei einem Verfahren zur Herstellung dreidimensionaler Objekte.

In der europäischen Patentschrift EP 0 431 924 B1 wird ein Verfahren zur Herstellung dreidimensionaler Objekte aus Computerdaten beschrieben. Dabei wird ein Partikelmaterial in einer dünnen Schicht auf eine Plattform aufgetragen und dieses selektiv mittels eines Tintenstrahldruckkopfes mit einer Flüssigkeit bedruckt. Im mit der Flüssigkeit bedruckten Bereich verbinden sich die Partikel, und der Bereich verfestigt unter dem Einfluss der Flüssigkeit und gegebenenfalls eines zusätzlichen Härters. Anschließend wir die Plattform um eine Schichtdicke in einen Bauzylinder abgesenkt und mit einer neuen Schicht Partikelmaterial versehen, die ebenfalls, wie oben beschrieben, bedruckt wird. Diese Schritte werden wiederholt, bis eine gewisse, erwünschte Höhe des Objektes erreicht ist. Aus den bedruckten und verfestigten Bereichen entsteht so ein dreidimensionales Objekt.

Dieses aus verfestigtem Partikelmaterial hergestellte Objekt ist nach seiner Fertigstellung in losem Partikelmaterial eingebettet und wird anschließend davon befreit. Dies erfolgt beispielsweise mittels eines Saugers. Übrig bleiben danach die gewünschten Objekte, die dann von Pulveranhaftungen z.B. durch händisches Abbürsten befreit werden.

Das 3D-Drucken auf Basis pulverförmiger Werkstoffe und dem Eintrag von Flüssigkeiten mit einem Druckkopf ist unter den Schichtbautechniken das schnellste Verfahren.

Mit diesem Verfahren lassen sich verschiedene Partikelmaterialien, dazu zählen - nicht erschöpfend - natürliche biologische Rohstoffe, polymere Kunststoffe, Metalle, Keramiken und Sande, verarbeiten.

Als Bindesystem kann z.B. ein Feststoff im Partikelmaterial dienen. Dieser wird durch ein aus dem Tintenstrahldruckkopf ausgestoßenes Lösemittel in Lösung gebracht. Nach dem Verflüchtigen des Lösemittels haften die Partikel an den gewünschten Stellen zusammen. Das Bauteil kann aus dem restlichen losen Pulver nach einer gewissen Wartezeit entnommen werden.

Das Lösemittel wird dabei aus einer großen Anzahl von Stoffgruppen ausgewählt. Hierbei werden häufig organische Lösemittel verwendet, die für diese Anwendung geeigneten Kunststoffe durchdringen dabei Moleküle unterschiedlicher Partikel. Ebenso wichtig sind Säure und Basen, die metallische Strukturen je nach Metall zersetzen.

Auch können polymerisierende Flüssigkeiten für das Binden der Partikel verwendet werden. Diese gehen vom flüssigen in einen festen Zustand über, wenn die Polymerisationsreaktion gestartet wird. Der Start kann über Temperatur, Strahlung oder über das Zusammenkommen mit einem Katalysator oder Initiator erfolgen. Bei vielen Systemen wirken Metallionen katalytisch.

Der Druckkopf selbst ist aus einer Reihe von Elementen aufgebaut. Dazu zählen Tanks, Ventile, Schläuche, Verbinder, Filter, und die Druckmodule, die die eigentliche Druckfunktion ausführen.

Der Druckkopf mit seinen Druckmodulen muss selbst äußerst exakt positioniert werden. Die Genauigkeit der Lage des Druckkopfes bestimmt nicht zuletzt die geometrische Genauigkeit der mit dem Verfahren erzeugten Bauteile.

Eine Justierung eines Druckkopfes erfolgt üblicherweise mit Hilfe von Erfahrungswerten. Der Druckkopf kann beispielsweise in der Vorrichtung montiert werden und dann dergestalt justiert werden, dass er auf eine Platte gelegt wird, auf der Platte ausgerichtet und festgestellt wird. Dadurch findet eine Justierung des Druckkopfes statt. Eine solche Art der Justierung basiert auf Erfahrungswerten und muss von entsprechend geschultem Personal durchgeführt werden. Eine Justierung durch den Kunden vor Ort ist nur schwer durchführbar.

Eine weitere Möglichkeit ist auch eine sogenannte «optische Justierung». Hierbei werden die Düsen über Mikroskop justiert. Durch Verschieben der Düsen werden diese mit Hilfe des Mikroskops in Position gebracht, was mit Hilfe eines Fadenkreuzes geschieht.

Eine andere Vorrichtung zum Justieren eines Druckkopfes zum Herstellen dreidimensionaler Modelle ist aus der US 2010/100224 A1 bekannt.

Darüber hinaus ist das Ein- und Feststellen des Druckkopfes häufig nur mit handwerklichem Geschick durchführbar, da entsprechende Feststellelemente oft nur schwer zugänglich sind, was eine Justierung durch einen ungeübten Nichtfachmann noch weiter erschweren kann.

Es war daher eine Aufgabe der vorliegenden Erfindung, eine Vorrichtung und ein Verfahren bereitzustellen, mit dem ein einfaches und verlässliches Justieren eines Druckkopfes möglich ist.

### Kurze Zusammenfassung der Offenbarung

In einem Aspekt betrifft die Erfindung eine Vorrichtung zum Justieren eines Druckkopfes zum Herstellen dreidimensionaler Modelle, wobei die Justierung um Drehachsen erfolgt und wobei eine der Drehachsen von einem Betätigungsmittel entkoppelt ist.

In einem weiteren Aspekt betrifft die Erfindung auch ein Verfahren zum Justieren eines Druckkopfes zum Herstellen dreidimensionaler Modelle, wobei die Justierung mittels der erfindungsgemäßen Vorrichtung erfolgt.

### Kurze Beschreibung der Figuren

Figur 1: Schematische Darstellung der Komponenten eines pulverbasierten 3D-Druckers als geschnittener Schrägriss.
Figur 2: Schematische Darstellung des Ablaufs eines konventionellen 3D-Druckprozesses bei Verwendung einer schichtweisen Strahlungshärtung.
Figur 3: Darstellung einer Düse eines Druckkopfes, sowie Tropfen des Druckkopfes auf dem Substrat (Fig. 3a)). Weiterhin sind verschiedene Ansichten eines Druckkopfes dargestellt (Fig. 3b) und c)).
Figur 4: Schematische Darstellung einer Kulissenführung eines Druckkopfes gemäß einer bevorzugten Ausführungsform der Erfindung.

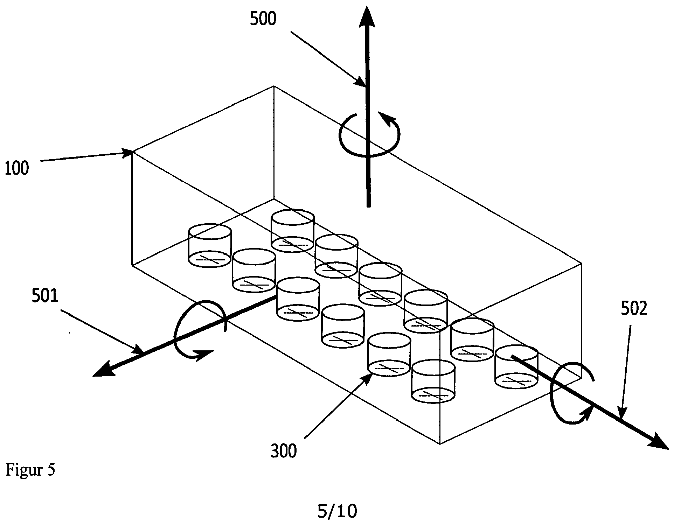

Figur 5: Darstellung eines Druckkopfes im Schrägriss mit verschiedenen Drehachsen zum Justieren eines Druckkopfes.
Figur 6: Es ist eine Feststellschraube einer Kulissenführung dargestellt.
Figur 7: Gezeigt sind Schnitte durch eine Kulissenführung, sowie mögliche Einstellungen und Ausgestaltungen derselben.
Figur 8: Darstellung bevorzugter Ausführungsformen einer Kulissenführung mit einer Vorspannvorrichtung zum Ausgleich von Spiel in der Führung.
Figur 9: Schematische Darstellung einer Kulissenführung in zwei verschiedenen Stellungen.
Figur 10: Eine Skizze einer bevorzugten Ausführungsform der erfindungsgemäßen Vorrichtung mit mehreren Achsen als Schrägriss und in einer Seitenansicht.

### Ausführliche Beschreibung

Im Folgenden werden einige Begriffe näher definiert. Andernfalls sind für die verwendeten Begriffe die dem Fachmann bekannten Bedeutungen zu verstehen.

Im Sinne der Erfindung sind "3D-Druckverfahren" alle aus dem Stand der Technik bekannten Verfahren, die den Aufbau von Bauteilen in dreidimensionalen Formen ermöglichen und mit den beschriebenen Verfahrenskomponenten und Vorrichtungen kompatibel sind.

"Selektiver Binderauftrag" oder "Selektiver Bindersystemauftrag" kann im Sinne der Erfindung nach jedem Partikelmaterialauftrag erfolgen oder je nach den Erfordernissen des Formkörpers und zur Optimierung der Formkörperherstellung auch unregelmäßig erfolgen, d.h. nicht linear und parallel nach jedem Partikelmaterialauftrag. "Selektiver Binderauftrag" oder "Selektiver Bindersystemauftrag" kann somit individuell und im Verlauf der Formkörperherstellung eingestellt werden.

"Formkörper" oder "Bauteil" im Sinne der Erfindung sind alle mittels des erfindungsgemäßen Verfahrens oder/und der erfindungsgemäßen Vorrichtung hergestellte dreidimensionale Objekte, die eine Formfestigkeit aufweisen.

Als "Vorrichtung" zum Durchführen des erfindungsgemäßen Verfahrens kann jede bekannte 3D-Druckvorrichtung verwendet werden, die die erforderlichen Bauteile beinhaltet. Übliche Komponenten beinhalten Beschichter, Baufeld, Mittel zum Verfahren des Baufeldes oder anderer Bauteile, Dosiervorrichtung und Wärmemittel und andere dem Fachmann bekannte Bauteile, die deshalb hier nicht näher ausgeführt werden.

Als "Partikelmaterialien" können alle für den Pulver-basierten 3D-Druck bekannten Materialien verwendet werden, insbesondere Sande, Keramikpulver, Metallpulver, Kunststoffe, Holzpartikel, Faserwerkstoffe, Cellulosen oder/und Laktosepulver. Das Partikelmaterial ist vorzugsweise ein trocken frei fließendes Pulver, aber auch ein kohäsives schnittfestes Pulver kann verwendet werden.

"Bauraum" ist der geometrische Ort, in dem die Partikelmaterialschüttung während des Bauprozesses durch wiederholtes Beschichten mit Partikelmaterial wächst. Im Allgemeinen wird der Bauraum durch einen Boden, die Bauplattform, durch Wände und eine offene Deckfläche, die Bauebene, begrenzt.

Der "Druckkopf" setzt sich aus verschiedenen Komponenten zusammen. Unter anderem sind das die Druckmodule. Diese sind relativ zum Druckkopf ausgerichtet. Der Druckkopf ist relativ zur Maschine ausgerichtet. Damit kann die Lage einer Düse dem Maschinenkoordinatensystem zugeordnet werden. Allerdings ergeben sich durch Montageungenauigkeiten und Toleranzen zwischen den Maschinenkomponenten immer Abweichungen zu dieser Idealposition. Diese müssen mit einem Präzisionsversteller ausgeglichen werden, da sich dies ansonsten negativ auf die Bauteilgenauigkeit der herzustellenden Bauteile auswirkt.

Das "Druckfluid" wird als Wirkmedium für den 3D-Druckprozess benötigt. Es durchströmt den Druckkopf und wird vom Druckkopf in diskreten Tropfen zur gewünschten Zeit in Richtung Baufeld abgegeben.

"Betätigungsmittel" umfassen mechanisch oder elektrisch betätigte Verstellelemente wie Gewinde, Exzenter, Zahnrad-/Zahnstangen-/Schneckengetriebe, Kurvenscheiben, verschiebbare Keile, alle auch mit Vorspannkraft belastet. Diese ermöglichen eine feinfühlige Verstellung der Justierungsanordnung.

Unter dem Begriff "entkoppelt", wie er hier zum Beschreiben der Justierungsanordnung benutzt wird, ist gemäß der vorliegenden Erfindung zu verstehen, dass nicht direkt auf die entsprechende Drehachse eingewirkt wird, sondern über ein entkoppeltes Element.

Eine "Kulisse" ist ein im Maschinenbau eingesetztes Getriebeelement zur Kraftübertragung. Eine "Kulissenführung" wie sie im Zusammenhang mit den beschriebenen Ausführungsformen verwendet wird, ist eine Führung, in der die Bewegung des zu führenden Teiles durch einen speziell geformten Schlitz, Steg oder eine Nut - die Kulisse - zwangsweise bestimmt wird. Die Übertragung der Bewegung kann hierbei sowohl unmittelbar durch Eingriff des zu führenden Teils in die Kulisse, als auch mittelbar durch zwischengeschaltete Wälzkörper oder Gleitsteine erfolgen. Mit einer Kulissenführung können komplizierte Bewegungen erzeugt werden, so ist es beispielsweise einfach möglich, virtuelle Drehpunkte außerhalb der Führungsteile zu generieren.

Eine "Feststellschraube", wie sie zur Beschreibung der Erfindung im Folgenden beschrieben wird, kann jede Art und Anordnung von Befestigungsmitteln umfassen, die zu einem Feststellen der Kulissenführung geeignet sind. Dies müssen nicht zwangsläufig Schraubenelemente sein, sondern können auch Klemmelemente sein.

Mit dem Begriff "vorgespannte Feststellschraube" soll umfasst werden, dass das Feststellelement in einem noch nicht festgestellten Zustand schon eine gewisse Spannung auf die festzustellende Verbindung aufbringt. Dies hat zum Ziel, dass sich eine justierte Position nicht durch minimale Berührungen sofort wieder verstellt.

"Gleitsteine und Wälzkörper" sollen gemäß der vorliegenden Beschreibung als Konstruktionselemente verstanden werden, die als Mittler zwischen den beiden Elementen der Kulissenführung liegen und die Bewegungen ausschließlich durch Gleiten (Gleitstein) oder überwiegend durch Abwälzen (Wälzkörper) auf das zu führende Element übertragen. Hierzu sind diese Konstruktionselemente oft in einer speziellen Form und/oder einem Werkstoff ausgeführt, welche sowohl Kraftübertragung und Kraftverteilung als auch die Haltbarkeit verbessern.

Verschiedene Aspekte der Erfindung werden im Folgenden beschrieben. Die Erfindung betrifft in einem Aspekt eine Vorrichtung zum Justieren eines Druckkopfes zum Herstellen dreidimensionaler Modelle, wobei die Justierung um Drehachsen erfolgt und wobei eine der Drehachsen von einem Betätigungsmittel entkoppelt ist und die Entkopplung über eine Kulissenführung bereitgestellt ist.

Mittels einer derartigen Ausgestaltung ist es möglich, dass eine Justierung des Druckkopfes auch vom Kunden selbst in verlässlicher Weise durchgeführt werden kann. Ein Einstellen des Druckkopfes muss nicht mehr direkt an der Drehachse selbst vorgenommen werden, sondern kann an einer besser zugänglichen Stelle stattfinden.

Die Anordnung der Drehachse kann nun so gelegt werden, dass nach einer Verstellung eine Nachmessung ohne zeitraubende Neujustierung des Messmittels möglich ist, beispielsweise indem die Drehachse durch einen Referenzpunkt der Messung führt. Daraus ergibt sich, dass die Verstellung auch vom Laien gut vorhersehbar ist, weshalb wenige, einfache Messvorgänge zum gewünschten Ergebnis führen.

Wie schon erwähnt kann eine Einstellung der Drehachsen so gelegt werden, dass sie sich auf zugänglichen Flächen befindet. Dies können am vorteilhaftesten Referenzflächen der Moduleinstellung sein, etwa die Düsenplatte bzw. Anschlagfläche der Druckkopfgrundplatte. Somit findet die Messung direkt an den zu justierenden Flächen statt, ohne den Umweg über eine eventuell ungenauere Mittlerfläche.

Gemäß der Erfindung erfolgt die Entkopplung der Drehachse von dem Betätigungsmittel über eine Kulissenführung. Eine Kulissenführung stellt sicher, dass auch ein Nichtfachmann eine Justierung in einfacher Weise nach einer Anleitung durchführen kann. Das Einstellen ist entsprechend der Führung der Kulisse vorgegeben und der Bediener kann somit die Einstellung in einfacher Weise durchführen. Ferner kann mit einer Kulissenführung sichergestellt werden, dass eine Justierung an einer gut zugänglichen Stelle erfolgen kann.

Die Drehachsen zum Justieren sind in einer Richtung senkrecht zu einer Bauebene, sowie in einer ersten und zweiten, zur ersten senkrechten, Richtung der Bauebene vorgesehen. Ferner erfolgt zumindest die Justierung in mindestens einer der Richtungen der Bauebene über eine Kulissenführung.

Eine Justierung der Drehachse in Richtung senkrecht zur Bauebene kann dabei auch nicht entkoppelt erfolgen. Diese Justierung kann dann beispielsweise über einen direkt auf den Druckkopf wirkenden Stift bereitgestellt werden. Dies stellt eine einfache Justierungsmöglichkeit dar, und bei der sogenannten Höhenverstellung ist eine einfache Zugänglichkeit häufig sowieso gegeben.

Über den Stift kann dabei auch vorzugsweise eine Justierung in Drehachsenrichtung und in linearer Richtung des Stiftes erfolgen.

Um den justierten Druckkopf festzustellen, kann es gemäß einer bevorzugten Ausführungsform der Erfindung auch vorgesehen sein, dass das Feststellen der Justierung, insbesondere der Kulissenführung, über eine Schraube erfolgt.

Diese Schraube ist ebenso vorzugsweise gut zugänglich angebracht.

Wenn die Feststellschraube nun schon während des Justierungsprozesses eine Vorspannung aufweist, dann kann auch sichergestellt werden, dass zwischen Einstellen und Feststellen des justierten Druckkopfes keine Beeinflussung der Stellung des Druckkopfes mehr erfolgt.

Gemäß der Erfindung wird die Kulissenführung durch Ineinandergreifen von zwei entkoppelten Bauteilen bereitgestellt, wobei ein Bauteil den Druckkopf umfasst.

Dass der Druckkopf umfasst ist, soll hier bedeuten, dass dieser an einem der Bauteile angebracht ist oder enthalten ist.

Damit ein Verstellen und damit Justieren in einfacher und genauer Art und Weise möglich ist, kann es auch vorteilhaft sein, wenn im Bereich des Ineinandergreifens der beiden Bauteile Gleitsteine und/oder Wälzkörper eingesetzt werden. Diese "Lager" stellen sicher, dass die Bauteile aneinander "laufen" und sich nicht verkanten oder festsetzen.

In einem weiteren Aspekt betrifft die vorliegende Erfindung ein Verfahren zum Justieren eines Druckkopfes zum Herstellen dreidimensionaler Modelle.

Bevorzugte Ausführungsformen werden im Folgenden beschrieben.

Im Folgenden wird die vorliegende Erfindung anhand von Beispielen näher erläutert, die bevorzugte Ausführungsformen darstellen.

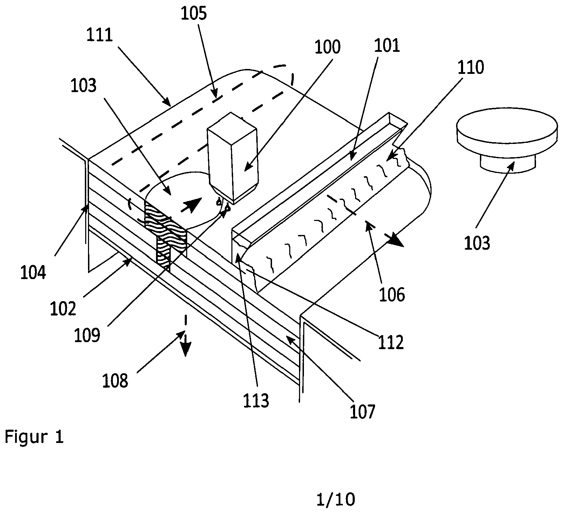

Ein 3D-Drucker für eine bevorzugte Ausführungsform eines pulverbasierten 3D-Druckers weist einen Pulverbeschichter (101) auf. Mit diesem wird Partikelmaterial auf eine Bauplattform (102) innerhalb der Baufeldberandung (104) aufgebracht und geglättet (Figur 1). Das aufgebrachte Partikelmaterial kann dabei aus verschiedensten Materialien bestehen. Beispielsweise können Füllstoffe wie Sande, künstliche Sande und keramische Partikel verwendet werden. Die Fließeigenschaften dieser Materialien können stark unterschiedlich ausfallen. Verschiedene Beschichtertechniken lassen die Schichtbildung von trockenen frei fließenden Pulvern über kohäsive schnittfeste Pulver bis hin zu flüssigkeitsbasierten Dispersionen zu. Die Höhe der Pulverschichten (107) wird durch die Bauplattform (102) bestimmt. Sie wird nach dem Aufbringen einer Schicht abgesenkt. Beim nächsten Beschichtungsvorgang wird das entstandene Volumen verfüllt und der Überstand glattgestrichen. Das Ergebnis ist eine nahezu perfekt parallele und glatte Schicht definierter Höhe.

Nach einem Beschichtungsprozess wird die Schicht mittels eines Druckkopfes (100) mit einer Druckflüssigkeit bedruckt. Das Druckbild entspricht dem Schnitt durch das Bauteil (103) in der aktuellen Bauhöhe der Vorrichtung. Die Flüssigkeit trifft auf das Partikelmaterial und diffundiert langsam hinein.

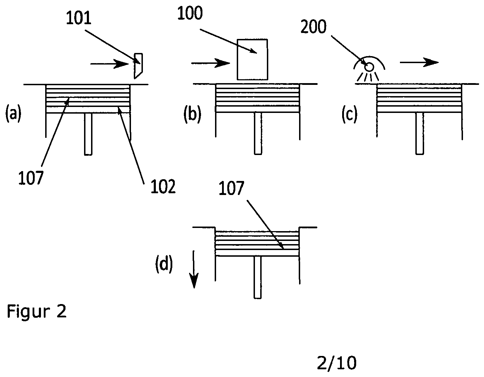

Schematisch ist der Ablauf eines konventionellen 3D-Druckprozesses bei Verwendung einer schichtweisen Strahlungshärtung in Figur 2 dargestellt. Dabei weist die Vorrichtung Mittel (200) auf, um den Pulverkuchen zu erwärmen und warmzuhalten. Dabei kann die eingebrachte Energie zum Teil durch das Pulver isoliert werden, so dass sich einmal aufgewärmtes Pulver nicht schnell abkühlen kann.

Als Mittel zur Erwärmung können Infrarotwärmequellen eingesetzt werden. Diese können statisch über dem Baufeld stehen oder mit bewegten Vorrichtungsteilen über das Baufeld bewegt werden. Geeignet sind Halogenstrahler aus Quarzglas ebenso wie Keramikstrahler. Auch Spiegel für IR-Strahlung sind geeignet um den Wärmehaushalt zu beeinflussen und zu kontrollieren.

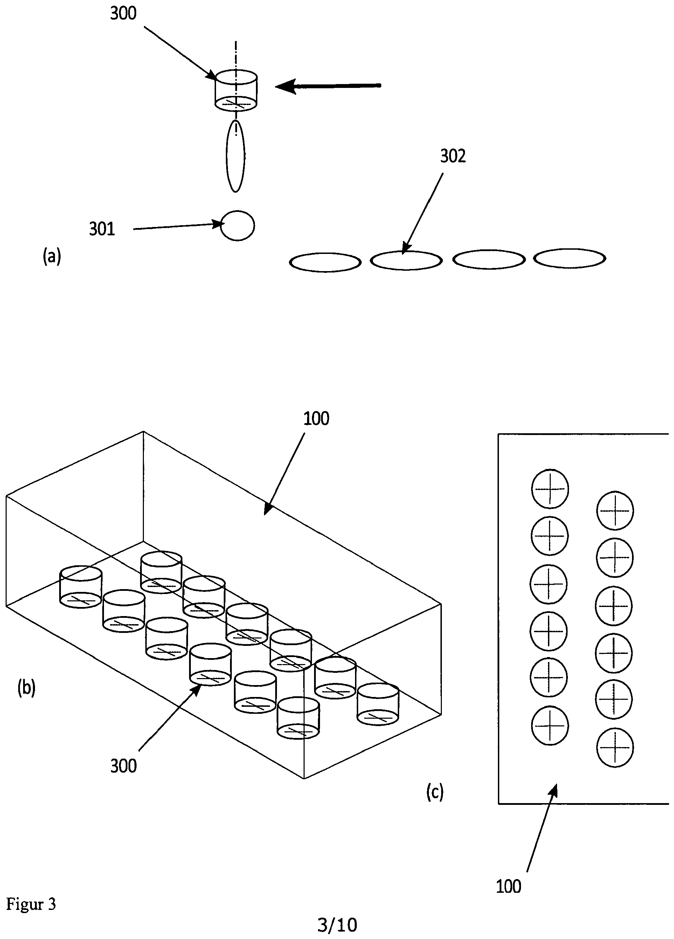

Der Druckkopf (100) weist mehrere Düsen (300) auf, durch die die entsprechende Druckerflüssigkeit auf die Bauplattform (102) bzw. das darauf aufgebrachte Substrat aufgebracht wird. Das Aufbringen der Druckerflüssigkeit erfolgt dabei in Form von Tropfen (301), die auch in Tropfenform auf das Substrat aufgebracht werden (302) (Figur 3a).

Eine Anordnung der Düsen (301) in dem Druckkopf (100) kann dabei in jeder für das Aufbringen des jeweiligen Materials sinnvollen Art und Weise erfolgen (Figuren 3b und 3c).

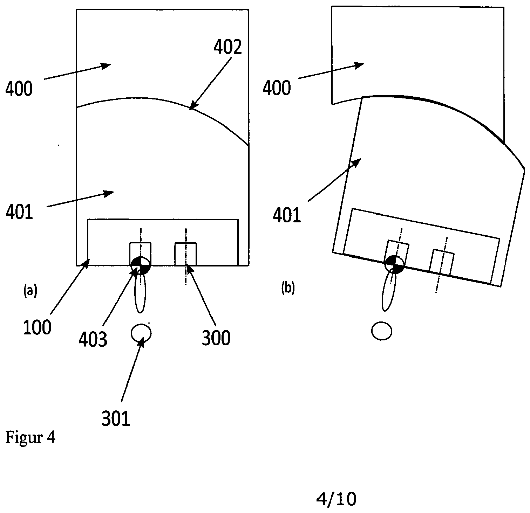

In Figur 4 ist eine Kulissenführung (402) des Druckkopfes (100) schematisch dargestellt. Die Kulissenführung weist ein Oberteil (400) und ein Unterteil (401) auf, das den Druckkopf (100) umfasst. Gemäß dem gezeigten Ausführungsbeispiel ist das Unterteil (401) bei Krafteinwirkung um einen Drehpunkt (403) entlang der Kulissenführung drehbar. Figuren 4a) und 4b) zeigen zwei verschiedene Positionen der Kulissenführung, wodurch verdeutlicht wird, wie der Druckkopf (100) hier eingestellt bzw. justiert werden kann.

Ein Druckkopf sollte vorzugsweise derart justiert werden können, indem er entlang drei zueinander senkrechten Drehachsen eingestellt werden kann, nämlich die Hochachse (500), die X-Achse (501) und die Y-Achse (502). Eine zusätzliche lineare Einstellmöglichkeit entlang der Drehachsen (500, 501, 502) kann dabei auch vorgesehen sein.

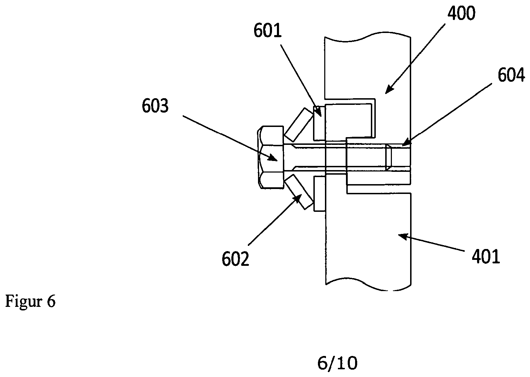

Wurde die gewünschte Justierung des Druckkopfes durchgeführt, kann dieser dann beispielsweise mittels einer Feststellschraube (603) in seiner Position fixiert werden. In Figur 6 ist eine solche Schraube (603) dargestellt, die im Bereich des Ineinandergreifens des Oberteils (400) und Unterteils (401) der Kulissenführung vorgesehen ist. In Figur 6 ist ein Schnitt eines Ausschnitts der Kulissenführung gezeugt. Die Schraube (603) wird gemäß der gezeigten bevorzugten Ausführungsform durch das Unterteil (401) der Kulissenführung (402) geführt. Hierbei ist die Öffnung in dem Unterteil (401) zum Durchführen der Schraube derart vorgesehen, dass die Schraube (603) ausreichend Spiel für die Justierung hat. Das Oberteil (400) weist ein Gewinde (604) auf, in dem die Schraube (603) geführt ist. Um auch im Zustand, in dem die Schraube nicht vollständig festgestellt ist eine gewisse Vorspannung zu erhalten, sind zwischen Unterteil (401) und Schraubenkopf eine Scheibe (601) und eine Tellerfeder (602) vorgesehen. Mittels der Tellerfeder (602) kann eine gewisse Vorspannung der Kulisse erreicht werden, damit die justierte Position sich vor und beim Feststellen nicht verstellt.

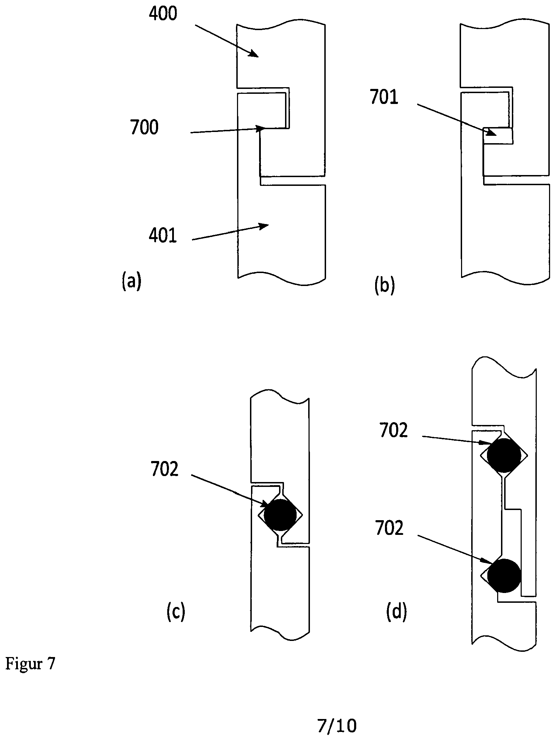

Damit beim Justieren kein Verkanten oder Festsitzen der beiden zueinander bewegten Teile (400, 401) der Kulissenführung (402), und damit auch keine Abnutzung bei einem Direktkontakt (700) erfolgt, kann gemäß den in der Figur 7 a) bis d) dargestellten Beispielen im Bereich des Kontaktes des Unter- und Oberteils (400, 401) ein Gleitstein (701) und/oder Wälzlager (702) vorgesehen sein. Wo und in welcher Form diese vorgesehen sind, erkennt der Fachmann in einfacher Weise.

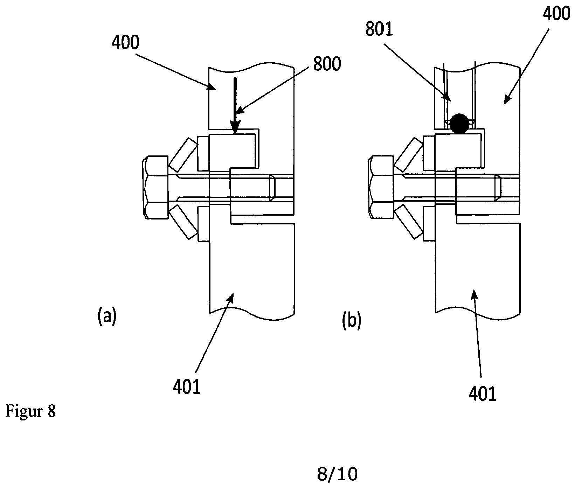

In der in Figur 8 dargestellten Schnittansicht durch einen Ausschnitt der Kulissenführung mit Oberteil (400) und Unterteil (401) wird gezeigt, wie eine Justierung der Kulissenführung entlang ihrer Führungskurve auch bei Spiel in den Führungselementen gewährleistet werden kann. Hierzu wird entsprechend eine Radialkraft (800) auf das Unterteil (401) aufgebracht, welche die Kräfte in der Führung immer übersteigt, so dass die Führungsflächen stets ohne Spiel aufeinandergepresst werden (Figur 8a). Das Aufbringen der Radialkraft kann dabei beispielsweise durch ein Druckstück (801), aber auch durch andere mechanische, pneumatische und/oder hydraulische Mittel erfolgen (Figur 8b).

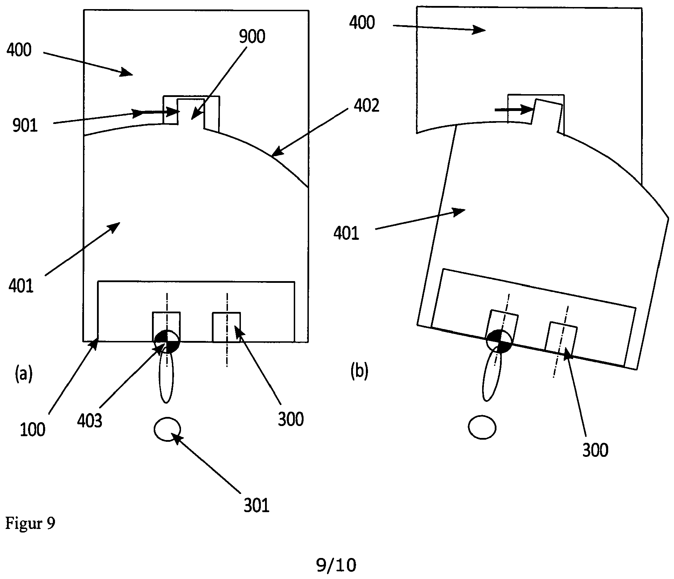

Eine Justierung in Richtung der Y-Achse und/oder X-Achse erfolgt, wie schon beschrieben, entlang der Kulissenführung (402) zwischen dem den Druckkopf (100) mit seinen Düsen (300) umfassenden Unterteil (401) und dem Oberteil (400) um einen Drehpunkt (403). Die Ausrückkraft (901) kann dabei beispielsweise auf einen Ausrückhebel (900) des Unterteils (401) aufgebracht werden (Figur 9a und b).

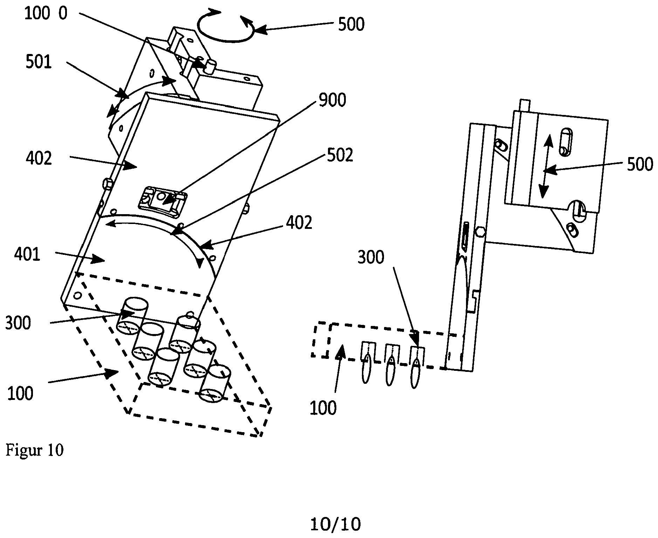

Bei Figur 10 handelt es sich um eine Skizze im Schrägriss (Figur 10a) und eine Schnittansicht (Figur 10b) einer Ausführung einer schematisierten Kulissenführung (402) für einen Druckkopf (100).

Es sind hier alle Achsen dargestellt: die X-Achse (501), Y-Achse (502), Hochachse (500) sowie auch die konventionelle Drehachse (1000). Hier wird eine mögliche Hintereinanderschaltung/Anordnung der verschiedenen Versteller gezeigt.

### Bezugszeichenliste:

- 100: Tintenstrahldruckkopf
- 101: Pulverbeschichter
- 102: Bauplattform
- 103: Bauteil
- 104: Baufeldberandung
- 107: Pulverschichten
- 200: IR-Strahler
- 300: Düse
- 301: Tropfen
- 302: Tropfen auf dem Substrat
- 400: Oberteil
- 401: Unterteil
- 402: Kulissenführung
- 403: Drehpunkt
- 500: Hochachse
- 501: X-Achse
- 502: Y-Achse
- 601: Scheibe
- 602: Tellerfeder
- 603: Schraube
- 604: Gewinde
- 700: Direktkontakt
- 701: Gleitstein
- 702: Wälzkörper
- 800: Radialkraft
- 801: Druckstück
- 900: Ausrückhebel
- 901: Ausrückkraft
- 1000: konventionelle Drehachse

## Patentansprüche

1. Vorrichtung zum Justieren eines Druckkopfes (100) zum Herstellen dreidimensionaler Modelle, wobei die Justierung um Drehachsen (500, 501, 502) erfolgt und wobei eine der Drehachsen (500, 501, 502) von einem Betätigungsmittel entkoppelt ist und die Entkopplung über eine Kulissenführung (402) bereitgestellt ist und wobei die Drehachsen (500, 501, 502) zum Justieren wie folgt vorgesehen sind: 11
(i) in einer Richtung senkrecht zu einer Bauebene,
(ii) in einer ersten Richtung der Bauebene, und
(iii) in einer zweiten Richtung der Bauebene, senkrecht zur ersten Richtung und wobei die Justierung in mindestens einer der Richtungen der Bauebene über die Kulissenführung (402) erfolgt, wobei die Kulissenführung (402) durch zwei entkoppelte beweglich miteinander in Eingriff stehende Bauteile erfolgt, wobei eines der Bauteile den Druckkopf (100) umfasst.

2. Vorrichtung nach Anspruch 1, wobei die Drehachse, die von einem Betätigungsmittel entkoppelt ist, von ihrer materiellen Führung und dem Betätigungsmittel räumlich entkoppelt ist.

3. Vorrichtung nach einem der vorhergehenden Ansprüche, wobei die Justierung der Drehachse in Richtung senkrecht zur Bauebene direkt und nicht entkoppelt erfolgt, vorzugsweise
wobei die Justierung der Drehachse in Richtung senkrecht zur Bauebene über einen Stift erfolgt, vorzugsweise
wobei über den Stift eine Justierung in Drehachsenrichtung und linearer Richtung des Stiftes erfolgt.

4. Vorrichtung nach einem der vorhergehenden Ansprüche, wobei ein Feststellen der Justierung der Kulissenführung (402) über eine Feststellschraube (603) erfolgt.

5. Vorrichtung nach Anspruch 4, wobei die Feststellschraube (603) im noch nicht festgestellten Zustand eine Vorspannung aufweist.

6. Vorrichtung nach einem der vorhergehenden Ansprüche, wobei im Bereich des beweglichen Eingriffs der beiden Bauteile Gleitsteine und oder Wälzkörper vorgesehen sind.

7. Vorrichtung nach einem der vorhergehenden Ansprüche, wobei zur Justierung entlang der Drehachsen in der ersten und in der zweiten, dazu senkrechten Richtung der Bauebene eine Kulissenführung vorgesehen ist und zur Justierung entlang der Drehachse in Richtung senkrecht zur Bauebene ein nicht entkoppelter Stift vorgesehen ist.

8. Verfahren zum Justieren eines Druckkopfes zum Herstellen dreidimensionaler Modelle, wobei die Justierung mittels einer Vorrichtung nach einem der vorhergehenden Ansprüche erfolgt.

9. Verfahren nach Anspruch 8, wobei die Drehachse, die von einem Betätigungsmittel entkoppelt ist, von ihrer materiellen Führung und dem Betätigungsmittel räumlich entkoppelt ist.

## Claims

1. A device for adjusting a print head (100) for producing three-dimensional models, wherein the adjustment takes place about axes of rotation (500, 501, 502) and wherein one of the axes of rotation (500, 501, 502) is decoupled from an actuating means and the decoupling is provided via a sliding block guide (402) and wherein the axes of rotation (500, 501, 502) are provided for adjustment as follows:
(i) in a direction perpendicular to a construction plane,
(ii) in a first direction of the construction plane, and
(iii) in a second direction of the construction plane, perpendicular to the first direction, and wherein adjustment in at least one of the directions of the construction plane is effected via the sliding block guide (402), wherein the sliding block guide (402) is implemented by two decoupled components which are movably engaged with one another, wherein one of the components comprises the print head (100).

2. The device according to claim 1, wherein the axis of rotation which is decoupled from an actuating means, is spatially decoupled from its material guidance and the actuating means.

3. The device according to any one of the preceding claims, wherein the adjustment of the axis of rotation in the direction perpendicular to the construction plane is effected directly and not in a decoupled manner, preferably
wherein the adjustment of the axis of rotation in the direction perpendicular to the construction plane is effected by a pin, preferably
wherein the pin is used to make an adjustment in the direction of the axis of rotation and linear direction of the pin.

4. The device according to any one of the preceding claims, wherein the adjustment of the sliding block guide (402) is locked by means of a locking screw (603).

5. The device according to claim 4, wherein the locking screw (603) has a pretension in the not yet locked state.

6. The device according to any one of the preceding claims, wherein sliding blocks and/or rolling elements are provided in the area of the movable engagement of the two components.

7. The device according to any one of the preceding claims, wherein for adjustment along the axes of rotation in the first and in the second direction of the construction plane perpendicular thereto a sliding block guide is provided and for adjustment along the axis of rotation in the direction perpendicular to the construction plane pin is provided which is not decoupled.

8. A method for adjusting a print head for producing three-dimensional models,
wherein the adjustment is carried out by means of a device according to any one of the preceding claims.

9. The method according to claim 8, wherein the axis of rotation which is decoupled from an actuating means, is spatially decoupled from its material guidance and the actuating means.

## Revendications

1. Dispositif d'ajustage d'une tête d'impression (100) pour la production de modèles tridimensionnels, dans lequel l'ajustage est effectué autour d'axes de rotation (500, 501, 502) et dans lequel l'un des axes de rotation (500, 501, 502) est découplé d'un moyen d'actionnement et le découplage est prévu par l'intermédiaire d'un guidage à coulisse (402) et dans lequel les axes de rotation (500, 501, 502) sont prévus pour l'ajustage comme suit :
(i) dans une direction perpendiculaire au plan de construction,
(ii) dans une première direction du plan de construction, et
(iii) dans une deuxième direction du plan de construction, perpendiculaire à la première direction, et dans lequel l'ajustage dans au moins une des directions du plan de construction est effectué par l'intermédiaire du guidage à coulisse (402), le guidage à coulisse (402) étant réalisé par deux composants découplés qui sont en prise l'un avec l'autre de manière mobile, dans lequel l'un des composants comprend la tête d'impression (100).

2. Dispositif selon la revendication 1, dans lequel l'axe de rotation, qui est découplé d'un moyen d'actionnement, est spatialement découplé de son guidage matériel et du moyen d'actionnement.

3. Dispositif selon l'une quelconque des revendications précédentes, dans lequel l'ajustage de l'axe de rotation dans la direction perpendiculaire au plan de construction est direct et non découplé, de préférence
dans lequel l'ajustage de l'axe de rotation dans la direction perpendiculaire au plan de construction s'effectue au moyen d'une goupille, de préférence
dans lequel la goupille est utilisée pour effectuer un ajustage dans la direction de l'axe de rotation et dans la direction linéaire de la goupille.

4. Dispositif selon l'une quelconque des revendications précédentes, dans lequel un blocage de l'ajustage du guidage à coulisse (402) est effectué au moyen d'une vis de blocage (603).

5. Dispositif selon la revendication 4, dans lequel la vis de blocage (603) a une prétension à l'état non encore bloqué.

6. Dispositif selon l'une quelconque des revendications précédentes, dans lequel des coulisseaux et/ou des éléments de roulement sont prévus dans la zone d'engagement mobile des deux composants.

7. Dispositif selon l'une quelconque des revendications précédentes, dans lequel on prévoit un guidage à coulisse pour l'ajustage selon les axes de rotation dans la première et dans la deuxième direction du plan de construction perpendiculaire à celui-ci, et dans lequel on prévoit une goupille non découplée pour l'ajustage selon l'axe de rotation dans la direction perpendiculaire au plan de construction.

8. Procédé d'ajustage d'une tête d'impression pour la production de modèles tridimensionnels, dans lequel l'ajustage est effectué au moyen d'un dispositif selon l'une quelconque des revendications précédentes.

9. Procédé selon la revendication 8, dans lequel l'axe de rotation, qui est découplé d'un moyen d'actionnement, est spatialement découplé de son guidage matériel et du moyen d'actionnement.
